# EUROPEAN PATENT APPLICATION

(11) **EP 4 421 405 A1**
(43) Date of publication of application: **28.08.2024**
(21) Application number: 23158325.3
(22) Date of filing: 23.02.2023
(51) Int. Cl.: F24H 3/04, F24H 3/10, F24H 9/1863, B60H 1/22, H05B 3/26, H05B 3/42, H05B 3/46, F24H 3/08

(54) **ELECTRIC HEAT EXCHANGER**

(71) Applicant: VALEO SYSTEMES THERMIQUES, 78320 Le Mesnil Saint-Denis (FR)
(72) Inventor: GAS, Pierre-Louis, 10800 Prague (CZ); RUZICKA, Ales, 10800 Prague (CZ); ALCOCER, Oscar Eduardo, 50200 Toluca (MX)
(74) Representative: Valeo Systèmes Thermiques

(57) **Abstract**

The present invention relates to an electrical heat exchanger (1) comprising at least one casing made of a first portion and a second portion, at least one tube (21) and at least two electrical heating elements (22, 22A, 22B), the two electrical heating elements (22, 22A, 22B) being enclosed in the tube (21) and disposed along a same plane, the electrical heating elements (22, 22A, 22B) comprising a first electrical connector (36) at a first longitudinal end (24) of said electrical heating elements (22, 22A, 22B) and a second electrical connector (38) at a second longitudinal end (26) of said electrical heating elements (22, 22A, 22B), the first electrical connectors (36) being electrically connected together inside the tube (21).

## Description

The invention relates to heat exchangers, and more particularly to electrical heat exchangers for automotive vehicles.

A vehicle generally includes a heater for heating a fluid, generally air, to be supplied to a passenger compartment. Additionally or alternatively, the heater is used to supply heated air to demist or defrost a windscreen of the vehicle. With the emergence of electric vehicles and hybrid vehicles, the heater is also applicable for battery thermal management. The heaters can be used for efficient thermal management of the batteries used for powering the electric motor, thereby drastically enhancing the service life of the batteries. The fluid to be heated is generally passed through a heat exchanger, which includes an electrical heating element such as for example heat exchange flow pipes through which a heated fluid circulates in case of thermal heater, or an electrical resistive element supplied with current in case of an electrical resistive heater. Particularly, the air to be heated circulates across the heating element of the heat exchanger and extracts heat from the heating element.

In the presence of electrical fluid heaters, the aforementioned resistive element is usually in the form of positive and negative wires wrapped around a plate in order to conduct the electric current, both the plate and the resistive element being enclosed in a tube. The more resistive elements there are, the better the current is conducted. However, the multiplication of both positive and negative wires in close vicinity around a same plate presents a risk of short-circuit. Furthermore, an operation of connecting these resistive elements to a power source might be complicated.

The present invention fits into this context by providing an electrical heat exchanger with a wider tube which can fit two electrical heating elements side by side, thus reducing the number of components needed for the electrical heat exchanger and facilitating their connection while limiting short-circuit risks. The present electrical heat exchanger also simplifies the manufacturing process, reducing the packaging space while maximising heat exchanges.

In this context, the present invention is directed to an electrical heat exchanger comprising at least one casing made of a first portion and a second portion delimiting a volume, at least one port configured to let a fluid flow within the volume, at least one tube and at least two electrical heating elements, the tube being enclosed at least partially inside the volume, and the two electrical heating elements being enclosed in the tube and disposed along a same plane, the electrical heating elements comprising a first electrical connector at a first longitudinal end of said electrical heating elements and a second electrical connector at a second longitudinal end of said electrical heating elements, the first electrical connectors being electrically connected together inside the tube.

The electrical heat exchanger according to the invention is here an electrical fluid heater. It is intended to equip a vehicle, for instance an automotive vehicle, in order to create a flow of heated air for functions such as the heating of an interior of the vehicle, the demisting or defrosting of its windscreen, or the thermal management of its batteries. Such an electrical heat exchanger comprises a casing which is here made of two parts, a first portion and a second portion, defining a volume in which is enclosed a tube itself enclosing a first and a second electrical heating elements. These two electrical heating elements are disposed side by side in the tube. One electrical heating element is dedicated to a flow of positive current while the other is dedicated to a flow of negative current. Having two distinct electrical heating elements allows a separation of the positive current flow and the negative current flow, thus reducing short-circuit risk. Indeed, while in the prior art wires of the electrical heating elements needed to be close together in order to fit on a unique electrical heating element, while they can now be spaced out as they are accommodated on two separate electrical heating elements.

The electrical heating elements both extend from a first longitudinal end to a second longitudinal end, each of these ends comprising respectively a first electrical connector and a second electrical connector. Inside the tube, the first electrical connector of the first electrical heating element is linked to the first electrical connector of the second electrical heating element.

Such a disposition of the electrical heating elements inside of the tube allows a reduction in the number of connections needed, a weight and packaging reduction, as well as a cost reduction as the number of tubes is divided by two compared to electrical heat exchangers of the prior art. The electrical heat exchanger according to the invention furthermore facilitates the connection between the electrical heating elements, which can be connected in series in a same tube.

As an option of the invention, the first electrical connectors of the electrical heating elements are connected by a connecting plate.

This connecting plate is thus arranged inside the tube. It electrically links the first electrical connectors of the two electrical heating elements without them otherwise being in contact with each other.

According to an optional characteristic of the invention, the second electrical connectors of the electrical heating elements extend out of the tube.

The second electrical connectors extending out of the tube makes them easily accessible for users of the electrical heat exchanger, for instance to facilitate the electrical connection of the electrical heating elements.

In some embodiments, the first electrical connectors are located on longitudinal sides of each of the electrical heating elements facing each other.

As a result, the connecting plate is located between the two electrical heating elements, and more precisely between their respective longitudinal sides which face each other. Conversely, the second electrical connectors are located on lateral sides of the electrical heating elements.

According to an optional characteristic, the electrical heating elements comprise a mica plate and a resistive element.

In some embodiments, the resistive element is wrapped around the mica plate.

As mentioned before, the resistive element is for example a wire which is wrapped around the mica plate. It can be either a positive wire or a negative wire. As there are two electrical heating elements in each tube, the number of wires is doubled while still avoiding overheating issues since there is one electrical heating element dedicated to the positive wire and one electrical heating element dedicated to the negative wire.

According to another optional characteristic, the mica plate and the resistive element are embedded in a potting material inside the tube.

Such potting material is an anorganic material in which the mica plate and the resistive element are embedded. It is used as an electrical insulator as well as to transfer heat.

According to another optional characteristic of the invention, at least one of the first portion and the second portion comprises a plane portion covering the tube within which the two electrical heating elements are enclosed.

The plane portion is for instance a middle part surrounded by four rims, this plane portion being flat. In some embodiments, both the first and the second portions comprise such plane portion.

According to another optional characteristic of the invention, the at least one casing is a first casing, the at least one tube is a first tube and the at least two electrical heating elements are a first and a second electrical heating elements, the electrical heat exchanger further comprising a second casing whose first and second portions enclose a second tube, said second tube enclosing both a third electrical heating element and a fourth electrical heating element.

In this embodiment, there are two casings, with a first casing and a second casing, each with a first portion and a second portion enclosing a tube itself enclosing two electrical heating elements. The two casings are stacked over each other and are in fluid communication. The way in which the casings are stacked allows for the electrical heating elements to be aligned, thus facilitating their electrical connection.

In some embodiments, the at least one port comprises a port for the first casing and a port for the second casing, the port of the first casing being a coolant inlet and the port of the second casing being a coolant outlet.

According to an optional characteristic of the invention, the second electrical connectors of each of the first, the second, the third and the fourth electrical heating elements are on a same side of the electrical heat exchanger.

Jointly with the fact that they extend out of their respective tube, this characteristic facilitates access to the connectors.

In some embodiments, turbulators are placed between the at least one casing and the tube.

Such turbulators are used to induce turbulences in the coolant fluid flow, in order to distribute it evenly along the electrical heating element. They may increase a surface of the electrical heating element which is in contact with the coolant fluid, and thus they increase the heat transfers. The turbulators may consequently participate in reducing the size and amount of heating elements needed.

The invention also relates to a vehicle comprising an electrical heat exchanger as previously described.

Other characteristics, details and advantages of the invention will become clearer on reading the following description, on the one hand, and several examples of realisation given as an indication and without limitation with reference to the schematic drawings annexed, on the other hand, on which:
[Fig. 1] is a perspective view of an electrical heat exchanger according to the invention;
[Fig. 2] is another perspective view of the electrical heat exchanger of figure 1;
[Fig. 3] is a perspective view of a tube of the electrical heat exchanger and of its components;
[Fig. 4] is a cross-section view of the tube of figure 3;
[Fig. 5] is a schematic representation of a cross-section of part of the electrical heat exchanger of figure 1.

The characteristics, variants and different modes of realization of the invention may be associated with each other in various combinations, in so far as they are not incompatible or exclusive with each other. In particular, variants of the invention comprising only a selection of features subsequently described in from the other features described may be imagined, if this selection of features is enough to confer a technical advantage and/or to differentiate the invention from prior art.

Like numbers refer to like elements throughout drawings.

In the following description, the designations "longitudinal", "transversal" and "vertical" refer to the orientation of the electrical heat exchanger according to the invention. A longitudinal direction corresponds to its main direction of extension, this longitudinal direction being parallel to a longitudinal axis L of a coordinate system L, V, T shown in the figures. A transversal direction corresponds to a direction according to which the first portion and the second portion are joined, this transversal direction being parallel to a transverse axis T of the coordinate system L, V, T, and perpendicular to the longitudinal axis L. Finally, a vertical direction corresponds to a vertical axis V of the coordinate system L, V, T, the vertical axis V being perpendicular to the longitudinal axis L and the transversal axis T.

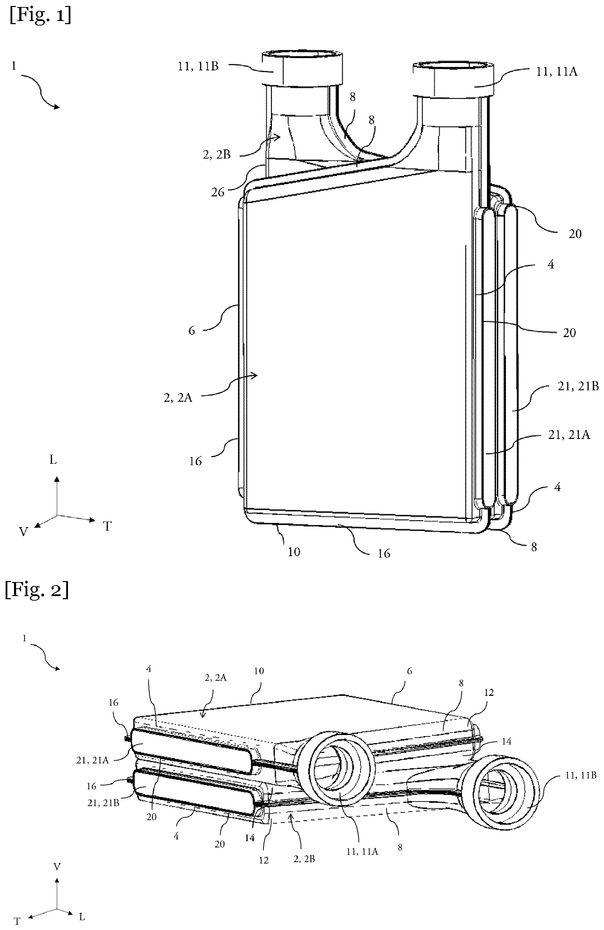

Figures 1 and 2 are perspective views of an electrical heat exchanger 1 for the circulation of a coolant fluid according to the invention. This electrical heat exchanger 1, or electrical fluid heater 1, is intended to equip an automotive vehicle so as to create a flow of heated air inside of it. Such air flow is heated thanks to the circulation of the coolant fluid in the electrical heat exchanger 1, which exchanges calories to heat the air which passes through the electrical heat exchanger 1.

The electrical heat exchanger 1 comprises at least one casing 2, which is an outer shell of the electrical heat exchanger 1. As is represented on the embodiments illustrated on the figures, here the electrical heat exchanger 1 comprises two casings 2 with a first casing 2A and a second casing 2B. While only one of these casings 2A, 2B will now be described in detail, it is to be understood that unless stated otherwise the characteristics described with regard to this casing are applicable to the other.

The casing 2 has two longitudinal sides 4, 6, with a first longitudinal side 4 and a second longitudinal side 6, as well as two lateral sides 8, 10, among which a first lateral side 8 and a second lateral side 10.

Coolant fluid is fed to the electrical heat exchanger 1 and discharged from it via at least one port 11. This port 11 is either an inlet 11A to let coolant fluid in the electrical heat exchanger 1 or an outlet 11B to let it out of it.

The port 11 projects out of the first lateral side 8. It mainly extends along the longitudinal direction D, in a manner such that it constitutes an extension of one of the longitudinal sides 4, 6; in other words, it is an elongation of this longitudinal side 4, 6.

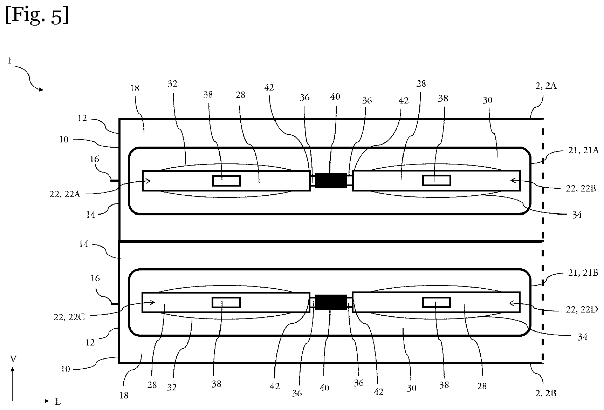

The casing 2 is made of two half-shells which are assembled together, namely a first portion 12 and a second portion 14. The first portion 12 and the second portion 14 are more precisely joined along an interface plane, which virtually divides the casing 2 in two substantially symmetrical parts. The two portions 12, 14 are thus of complimentary profiles which may be laser-welded together. Alternatively, these two portions 12, 14 may be brazed together along an edge 16, this edge 16 being particularly visible on figures 2 and 5.

When the first portion 12 and the second portion 14 are joined, they delimit between them a volume 18 which is visible on figure 5. This volume 18 is configured for the circulation of the coolant fluid within the electrical heat exchanger 1. The volume 18 is partially open, as both the first longitudinal side 4 and the second longitudinal side 6 are provided with through holes 20. These through holes 20 are of an oval shape and they are symmetrical according to a longitudinal-vertical plane perpendicular to the interface plane and placed at a same distance from each longitudinal side 4, 6.

A tube 21 is at least partially enclosed within the volume 18. This tube 21 is more particularly covered by a plane portion of either the first portion 12, the second portion 14, or both, this plane portion being flat. In other words, the plane portion, which corresponds to a middle portion of the first and/or second portions 12, 14, does not comprise grooves or ribs.

The tube 21 extends mainly according to a longitudinal-transversal plane. Along the transversal direction T, the tube 21 extends out of the casing 2 so that it passes through at least one of the longitudinal sides 4, 6, here through both longitudinal sides 4, 6 via their respective through holes 20.

Although it is not shown on the figures, it should be noted that the electrical heat exchanger 1 comprises turbulators which are used to disrupt the coolant fluid flow inside the casing 2. More particularly, these turbulators are placed between the casing 2 and the tube 21. They are disposed in the volume 18, in an annular shape formed in the casing 2 around the tube 21.

The tube 21, while schematically represented as solid on figures 1 and 2 for simplification purposes, is hollow. As a result, it can receive at least two electrical heating elements 22. More precisely, these electrical heating elements 22 are at least partially enclosed in the tube 21. The role of the electrical heating elements 22 is to heat the coolant fluid so that it can exchange calories with cold air passing through the electrical heat exchanger 1 in order to heat it as well.

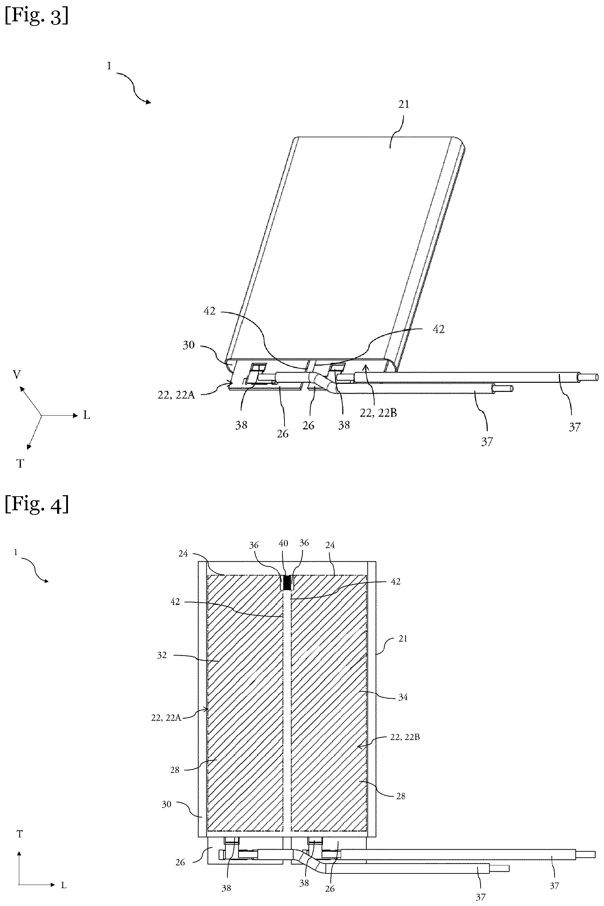

The electrical heating elements 22 will now be described in more detail. The tube 21 and its two electrical heating elements 22 are represented within the casing 2 on figures 1, 2 and 5, whereas they are isolated on figures 3 and 4. While here the tube 21 is described as receiving two electrical heating elements 22, the present invention intends to cover embodiments where a tube 21 comprises more than electrical heating elements 22, for instance embodiments in which there are four electrical heating elements in a single tube 21.

As is particularly visible on figures 3 to 5, the two electrical heating elements 22 are disposed side by side in the tube 21, which means that they are disposed along a same plane within this tube 21. There is thus a first electrical heating element 22A disposed next to a second electrical heating element 22B according to the longitudinal direction L. While they are next to each other, the two electrical heating elements 22 do not touch.

The electrical heating elements 22 have a substantially rectangular shape. Each electrical heating element 22 extends between two longitudinal ends 24, 26, that is from a first longitudinal end 24 to a second longitudinal end 26. These longitudinal ends 24, 26 delimit the electrical heating elements 22 along the transversal direction T, which is the direction in which they mainly extend.

Each electrical heating element 22 is made of at least a plate, for instance a mica plate 28, and a resistive element. Both are embedded, inside the tube 21, in a potting material 30 which acts as an electrical insulator. This potting material 30 is visible on figures 3 to 5.

The resistive element can take the form of a wire 32, 34 wrapped around the mica plate 28, such wrapping being illustrated on figures 4 and 5. As there are two electrical heating elements 22 within a same tube 21, one comprises a positive wire 32 while the other comprises a negative wire 34. As an example, the first electrical heating element 22A can be a mica plate 28 wrapped in a positive wire 32, whereas the second electrical heating element 22B is a mica plate 28 wrapped in a negative wire 34. Such separation of the positive wire 32 and the negative wire 34 limits short-circuit risks within the electrical heat exchanger 1.

Each electrical heating element 22 further comprises an electrical connector 36, 38 at each of its longitudinal ends 24, 26, with a first electrical connector 36 located on its first longitudinal end 24 and a second electrical connector 38 located on its second longitudinal end 26. The wires 32, 34 are wrapped around the mica plates 28 so that they connect the first electrical connector 36 of their respective electrical heating element 22 to its second electrical connector 38. The first electrical connector 36 of the first electrical heating element 22A is thus connected to the second electrical connector 38 of this electrical heating element 22A via the positive wire 32, whereas the first electrical connector 36 of the second electrical heating element 22B is connected to the second electrical connector 38 of the electrical heating element 22B via the negative wire 34.

The electrical connectors 34, 36 are destined to electrically link their respective electrical heating elements 22 to another electrical heating element 22, to another component of the electrical heat exchanger 1 or to a power source separate from the electrical heat exchanger 1. To this end, at least some of the electrical connectors 34, 36 may be connected to cables 37, as is the case on figures 3 and 4.

As mentioned above, the electrical heating elements 22 are at least partially enclosed in the tube 21. More precisely, their first longitudinal ends 24 having the first electrical connectors 36 are disposed inside the tube 21, while their second longitudinal ends 26 with the second electrical connectors 38 conversely extend out of this tube 21. The second electrical connectors 38 furthermore extend out of the casing 2 via the through holes 20 of its longitudinal sides 4, 6. Such extension of the second electrical connectors 38 makes them easily accessible for users of the electrical heat exchanger 1, for instance to connect them to other wires or cables 37, or to a power source.

The first electrical connector 36 of the first electrical heating element 22A and the first electrical connector 36 of the second electrical heating element 22B are thus both inside the tube 21. According to the invention, they are more precisely electrically connected to each other inside this tube 21.

As the first electrical heating element 22A and the second electrical heating element 22B do not touch, their respective first electrical connectors 36 are not in contact with each other. To connect them, the electrical heat exchanger 1 comprises a connecting plate 40. This connecting plate 40 provides both a physical and an electrical connection for the first electrical connectors 36 of the two electrical heating elements 22.

The connecting plate 40 can be seen on figures 4 and 5. It is a substantially flat plate made of a conductive material. Thanks to the connecting plate 40, the electrical current can circulate from the positive wire 32 of the first electrical heating element 22A to the negative wire 34 of the second electrical heating element 22 B, the current passing from one electrical heating element 22 to the other via the connecting plate 40.

As illustrated on these figures 4 and 5, the connecting plate 40 is disposed, according to the longitudinal direction L, in a space between the first electrical heating element 22A and the second electrical heating element 22B. Such disposition results from the fact that while the second electrical connectors 38 form an extension of the second longitudinal ends 26 of their respective electrical heating element 22 according to the transversal direction T, the first electrical connectors 36 are located on longitudinal sides 42 of the electrical heating elements 22 and as such form extensions according to the longitudinal direction L. More particularly, the first electrical connector 36 of the first electrical heating element 22A is disposed on a longitudinal side 42 of this first electrical heating element 22 which faces a longitudinal side 42 of the second electrical heating element 22B on which its first electrical connector 36 is disposed.

As mentioned before, in the present embodiments the electrical heat exchanger 1 according to the invention comprises, in lieu of its at least one casing 2, both a first casing 2A and a second casing 2B which are in fluid communication. When there are two casings 2A, 2B, each of them has a first portion 12 and a second portion 14 enclosing a tube 21. The first casing 2A thus encloses a first tube 21A while the second casing 2B encloses a second tube 21B. As a result, the electrical heat exchanger 1 comprises a first electrical heating element 22A and a second electrical heating element 22B both enclosed in the first tube 21A of the first casing 2A, as well as a third electrical heating element 22C and a fourth electrical heating element 22D both enclosed in the second tube 21B of the second casing 2B. These four electrical heating elements 22A, 22B, 22C, 22D are illustrated on figure 5.

The first and the second casing 2A, 2B are stacked on top of each other according to the vertical direction V, as shown on figures 1, 2 and 5. The first casing 2A is aligned with the second casing 2B in that their respective longitudinal sides 4, 6 are aligned and their respective lateral sides 8, 10 are aligned according to the vertical direction V. In addition, the casings 2A, 2B are stacked so that the second portion 14 of the first casing 2A faces the second portion 14 of the second casing 2B and is in contact with it.

As the first casing 2A and the second casing 2B are stacked so that their longitudinal sides 4, 6 are aligned, and as the second electrical connectors 38 are located on the second longitudinal ends 26 of the electrical heating elements 22 which extend either through the first longitudinal side 4 or the second longitudinal side 6, the second electrical connectors 38 of each of the first, the second, the third and the fourth electrical heating elements 22A, 22B, 22C, 22D are subsequently on a same side of the electrical heat exchanger 1.

One difference between the first casing 2A and the second casing 2B lies in the fact that the port 11 is an extension of the first longitudinal side 4 on the first casing 2A, whereas it is an extension of the second longitudinal side 6 on the second casing 2B. This port 11 can for instance be an inlet 11A for the first casing 2A and an outlet 11B for the second casing 2B. Such a disposition is configured to improve the coolant fluid flow within the two casings 2A, 2B. Consequently, depending on whether the second electrical connectors 38 extend through the first longitudinal side 4 or the second longitudinal side 6 of both the first casing 2A and the second casing 2B, the second electrical connectors 38 of all four of the first, second, third and fourth electrical heating elements 22A, 22B, 22C, 22D may all be closer to the inlet 11A than to the outlet 11B, or they may all be closer to the outlet 11B than to the inlet 11A.

The present invention thus covers an electrical heat exchanger wherein a tube encloses two electrical heating elements side by side, one for a positive current and one for a negative current, thus reducing short-circuit risks.

Many modifications and other embodiments of the invention set forth herein will come to mind to one skilled in the art to which the invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. An electrical heat exchanger (1) comprising at least one casing (2, 2A, 2B) made of a first portion (12) and a second portion (14) delimiting a volume (18), at least one port (11, 11A, 11B) configured to let a fluid flow within the volume (18), at least one tube (21, 21A, 21B) and at least two electrical heating elements (22, 22A, 22B, 22C, 22D), the tube (21, 21A, 21B) being enclosed at least partially inside the volume (18), and the two electrical heating elements (22, 22A, 22B, 22C, 22D) being enclosed in the tube (21, 21A, 21B) and disposed along a same plane, the electrical heating elements (22, 22A, 22B, 22C, 22D) comprising a first electrical connector (36) at a first longitudinal end (24) of said electrical heating elements (22, 22A, 22B, 22C, 22D) and a second electrical connector (38) at a second longitudinal end (26) of said electrical heating elements (22, 22A, 22B, 22C, 22D), the first electrical connectors (36) being electrically connected together inside the tube (21, 21A, 21B).

2. The electrical heat exchanger (1) according to the preceding claim, wherein the first electrical connectors (36) of the electrical heating elements (22, 22A, 22B, 22C, 22D) are connected by a connecting plate (40).

3. The electrical heat exchanger (1) according to the preceding claim, wherein the second electrical connectors (38) of the electrical heating elements (22, 22A, 22B, 22C, 22D) extend out of the tube (21, 21A, 21B).

4. The electrical heat exchanger (1) according to any of the preceding claims, wherein the first electrical connectors (36) are located on longitudinal sides (42) of each of the electrical heating elements (22, 22A, 22B, 22C, 22D) facing each other.

5. The electrical heat exchanger (1) according to any of the preceding claims, wherein the electrical heating elements (22, 22A, 22B, 22C, 22D) comprise a mica plate (28) and a resistive element (32, 34).

6. The electrical heat exchanger (1) according to the preceding claim, wherein the resistive element (32, 34) is wrapped around the mica plate (28).

7. The electrical heat exchanger (1) according to any one of claims 5 and 6, wherein the mica plate (28) and the resistive element (32, 34) are embedded in a potting material (30) inside the tube (21, 21A, 21B).

8. The electrical heat exchanger (1) according to any of the preceding claims, wherein at least one of the first portion (12) and the second portion (14) comprises a plane portion covering the tube (21, 21A, 21B) within which the two electrical heating elements (22, 22A, 22B, 22C, 22D) are enclosed.

9. The electrical heat exchanger (1) according to any of the preceding claims, wherein the at least one casing (2, 2A, 2B) is a first casing (2A), the at least one tube (21, 21A, 21B) is a first tube (21A) and the at least two electrical heating elements (22, 22A, 22B, 22C, 22D) are a first and a second electrical heating elements (22A, 22B), the electrical heat exchanger (1) further comprising a second casing (2B) whose first and second portions (14) enclose a second tube (21B), said second tube (21B) enclosing both a third electrical heating element (22C) and a fourth electrical heating element (22D).

10. The electrical heat exchanger (1) according to the preceding claim, wherein the second electrical connectors (38) of each of the first, the second, the third and the fourth electrical heating elements (22, 22A, 22B, 22C, 22D) are on a same side of the electrical heat exchanger (1).
